# EUROPEAN PATENT APPLICATION

(11) **EP 2 775 588 A2**
(43) Date of publication of application: **10.09.2014**
(21) Application number: 13158945.9
(22) Date of filing: 13.03.2013
(51) Int. Cl.: H02J 7/02

(54) **Apparatus, method, and system for wirelessly charging an electronic device**

(30) Priority: 08.03.2013 US 201313790015
(71) Applicant: O2 Micro, Inc., Santa Clara, CA 95054 (US)
(72) Inventor: Du, Shyundii Sterling, 201203 Shanghai (CN); Wang, James, San Jose, CA 95130 (US); Zhang, Weihua, 610041 Chengdu (CN); Wang, Jun, 610041 Chengdu, Sichuan (CN)
(74) Representative: Lippert, Stachow & Partner

(57) **Abstract**

An apparatus for wirelessly charging an electronic device (208) is disclosed. It comprises a charging controller (210) coupled to a power source (201), a power switch (221) coupled to the power source (201), a logic controller (222) coupled to the switch (221), and a wireless charger transmitter (223) coupled to the power source (201) via the power switch (221) and coupled to the logic controller (222). Power is transmitted from the power source (201) to a load (211) in the apparatus. The logic controller is configured to detect if the electronic device is wirelessly coupled to the apparatus and to switch on the power switch when the electronic device is detected to be wirelessly coupled. The wireless charger transmitter is integrated in the apparatus and configured to wirelessly transmit power from the power source to the electronic device when the switch is on.

## Description

### FIELD OF THE PRESENT TEACHING

The present teaching relates to apparatus, methods, and systems for charging. Particularly, the present teaching is directed to apparatus, methods, and systems for wirelessly charging an electronic device.

### BACKGROUND

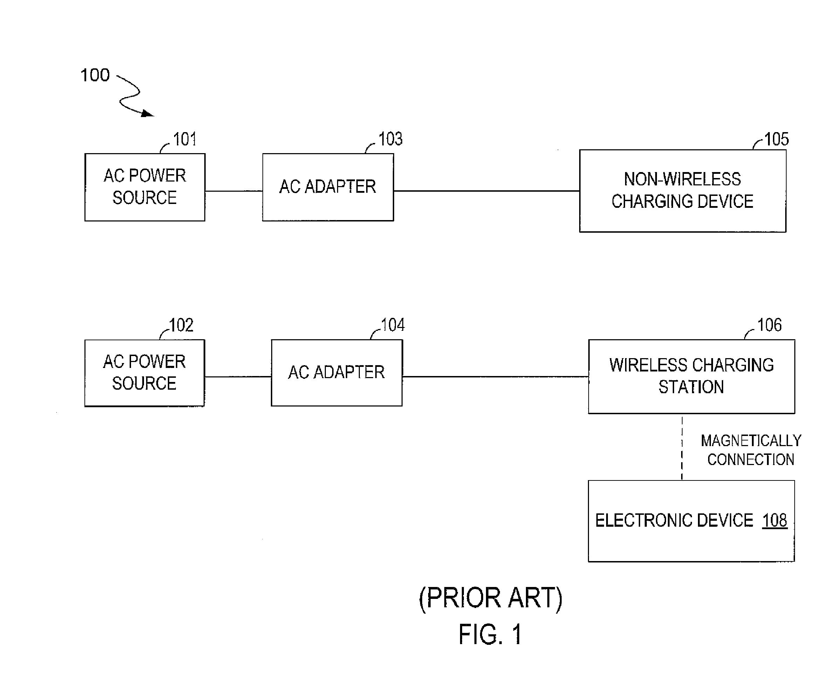

FIG. 1 shows a block diagram of a conventional charging system 100. The charging system 100 charges a non-wireless charging device 105 (e.g., a computer device) via a first power supply chain, and wirelessly charges an electronic device 108 (e.g., a mobile device) via a second power supply chain. As shown in the example of FIG. 1, the first power supply chain includes an AC power source 101 (e.g., a 220V commercial power supply) and an AC adapter 103 to charge the non-wireless charging device 105. The second power supply chain includes an AC power source 102 (e.g., a 220V commercial power supply), an AC adapter 104 and a wireless charging station 106 to wirelessly charge the electronic device 108. The electronic device 108 is wirelessly (for example, magnetically) coupled to the wireless charging station 106. Power is transferred from the wireless charging station 106 to the electronic device 108 based on near field magnetic induction between a primary coil (not shown in FIG. 1) in the wireless charging station 106 and a secondary coil (not shown in FIG. 1) in the electronic device 108.

As shown in the example of FIG. 1, when charging the non-wireless charging device 105 and the electronic device 108 simultaneously, at least two power sources and two AC adapters are needed in prior art. Therefore, it is not convenient for a consumer when traveling, working or even at home, as the consumer needs at least two sets of power sources and AC adapters at hand. Moreover, the more the power sources are, the more the power consumption of the charging system 100 is, and the less the system power efficiency is.

### SUMMARY

The embodiments described herein relate to apparatus, methods, and systems for charging. More particularly, the embodiments described herein relate to apparatus, methods, and systems for wirelessly charging an electronic device.

In one embodiment, an apparatus for wirelessly charging an electronic device is disclosed. The apparatus includes a charging controller coupled to a power source, a power switch coupled to the power source, a logic controller coupled to the power switch, and a wireless charger transmitter coupled to the power source via the power switch and coupled to the logic controller. The charging controller is configured to transmit power from the power source to a load in the apparatus. The logic controller is configured to detect if the electronic device is wirelessly coupled to the apparatus and to switch on the power switch when the electronic device is detected to be wirelessly coupled. The wireless charger transmitter is integrated in the apparatus and configured to wirelessly transmit power from the power source to the electronic device when the power switch is on.

In another embodiment, a method for wirelessly charging an electronic device is disclosed. A charging controller in an apparatus transmits power from a power source to a load in the apparatus. The apparatus further includes a power switch, a logic controller, and a wireless charger transmitter. The charging controller and the power switch are coupled to the power source. The logic controller is coupled to the power switch. The wireless charger transmitter is coupled to the power source via the power switch and coupled to the logic controller. The wireless charger transmitter is integrated in the apparatus. The logic controller detects if the electronic device is wirelessly coupled to the apparatus, and switches on the power switch when the electronic device is detected to be wirelessly coupled. The wireless charger transmitter wirelessly transmits power from the power source to the electronic device when the power switch is on.

In yet another embodiment, a system for wirelessly charging an electronic device. The system includes a power source and an apparatus. The apparatus includes a charging controller coupled to the power source, a power switch coupled to the power source, a logic controller coupled to the power switch, and a wireless charger transmitter coupled to the power source via the power switch and coupled to the logic controller. The charging controller transmits power from the power source to a load in the apparatus. The logic controller detects if the electronic device is wirelessly coupled to the apparatus, and switches on the power switch when the electronic device is detected to be wirelessly coupled. The wireless charger transmitter is integrated in the apparatus, and wirelessly transmits power from the power source to the electronic device when the power switch is on.

Additional advantages and novel features will be set forth in part in the description which follows, and in part will become apparent to those skilled in the art upon examination of the following and the accompanying drawings or may be learned by production or operation of the disclosed embodiments. The advantages of the present embodiments may be realized and attained by practice or use of various aspects of the methodologies, instrumentalities and combinations set forth in the detailed description set forth below.

### BRIEF DESCRIPTION OF THE DRAWINGS

Features and advantages of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram of a conventional charging system.

FIG. 2 is a block diagram of an example of a charging system, in accordance with one embodiment of the present teaching.

FIG. 3 is a block diagram of an example of a detailed charging system, in accordance with one embodiment of the present teaching.

FIG. 4 is a flowchart of an example of operations performed by a charging system, in accordance with one embodiment of the present teaching.

### DETAILED DESCRIPTION

Reference will now be made in detail to the embodiments of the present disclosure. While the present disclosure will be described in conjunction with these embodiments, it will be understood that they are not intended to limit the present disclosure to these embodiments. On the contrary, the present disclosure is intended to cover alternatives, modifications and equivalents, which may be included within the spirit and scope of the present disclosure as defined by the appended claims.

Furthermore, in the following detailed description of the present disclosure, numerous specific details are set forth in order to provide a thorough understanding of the present disclosure. However, it will be recognized by one of ordinary skill in the art that the present disclosure may be practiced without these specific details. In other instances, well known methods, procedures, components, and circuits have not been described in detail as not to unnecessarily obscure aspects of the present disclosure.

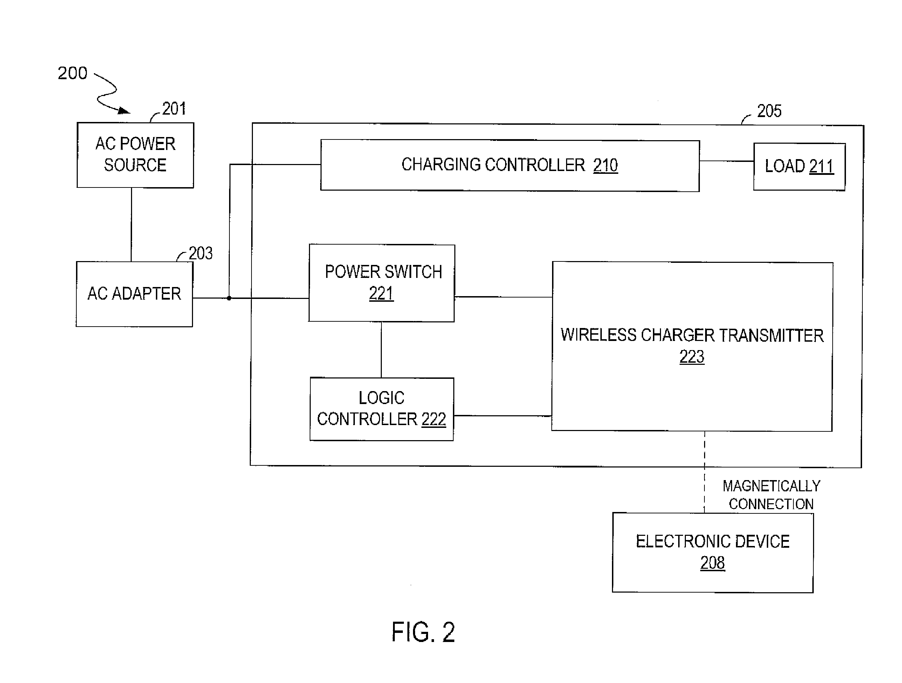

FIG. 2 shows a block diagram of an example of a charging system 200, in accordance with one embodiment of the present disclosure. As shown in the example of FIG. 2, the charging system 200 includes an AC power source 201 (e.g., a 220V commercial power supply), an AC adapter 203, a charging device 205 (e.g., a computer device) and an electronic device 208 (e.g., a mobile phone). The AC power source 201 provides power to the charging device 205 via the AC adapter 203. And the charging device 205 can wirelessly charge the electronic device 208 when the electronic device 208 is wirelessly coupled.

As shown in the example of FIG. 2, the charging device 205 includes a charging controller 210, a load 211 (e.g., a battery of the charging device 205), a power switch 221, a logic controller 222, and a wireless charger transmitter 223. In one embodiment, the charging controller 210 is coupled to the AC adapter 203 to receive power from the AC power source 201 to charge the load 211. The charging controller 210 can further control the power transferred to the load 211 in accordance with the status (e.g., voltage, current, and temperature, etc.) of the load 211.

The wireless charger transmitter 223 is coupled to the same AC power source 201 and the same AC adapter 203 via the power switch 221 as the charging controller 210. The wireless charger transmitter 223 wirelessly transmits power from the AC power source 201 to the electronic device 208. In one embodiment, the wireless charger transmitter 223 includes a primary coil (not shown in FIG. 2), and the electronic device 208 includes a secondary coil (not shown in FIG_{.} 2). Power is wirelessly transferred from the wireless charger transmitter 223 to the electronic device 208 due to the magnetic induction between the primary coil and the secondary coil.

As shown in the example of FIG. 2, the logic controller 222 is coupled to the wireless charger transmitter 223 and monitors a status of the primary coil to detect if the electronic device 208 is coupled. More specifically, when the electronic device 208 is wirelessly coupled (for example, the electronic device 208 is magnetically coupled to the charging device 205), a voltage variation occurs on the primary coil of the wireless charger transmitter 223. Thus, the logic controller 222 can monitor the voltage variation on the primary coil and determines that the electronic device 208 is wirelessly coupled to the charging device 205 if the voltage variation is detected.

In one embodiment, the logic controller 222 controls the power switch 221 to transfer power from the AC power source 201 to the electronic device 208. More specifically, when the logic controller 222 determines that the electronic device 208 is wirelessly coupled to the charging device 205, the logic controller 222 switches on the power switch 221 to transfer power from the AC power source 201 to the wireless charger transmitter 223, then the wireless charger transmitter 223 in the charging device 205 can wirelessly transmit power to charge the electronic device 208.

In accordance with various embodiments, the charging controller 210 can operate non-wirelessly, the logic controller 222 can be a coil sensing logic controller, and the wireless charger transmitter 223 can be integrated in the charging device 205.

With the wireless charger transmitter 223 in the charging device 205, the charging system 200 can non-wirelessly charge the charging device 205 and wirelessly charge the electronic device 208 simultaneously by utilizing one single set of power source and AC adapter. Therefore, it is convenient for a consumer when traveling, working or at home. And the number of the charging sources is reduced as the electronic device 208 can be easily put on a surface of the charging device 205 in comparison with the conventional two power chains. Moreover, the power consumption is reduced accordingly by reducing the charging sources.

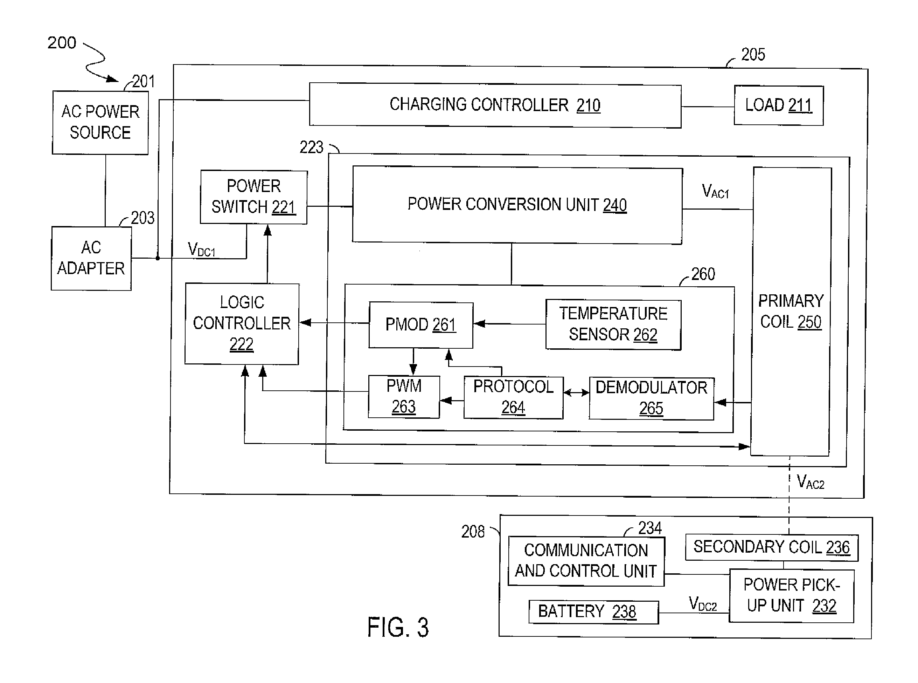

FIG. 3 shows a block diagram of an example of a detailed charging system 200 in FIG. 2, in accordance with one embodiment of the present disclosure. Elements labeled the same as in FIG. 2 have similar functions and will not be repetitively described herein for purposes of brevity and clarity. Also, the charging system may include components other that those shown. As shown in the example of FIG. 3, the wireless charger transmitter 223 includes a power conversion unit 240, a primary coil 250, and a communication and control unit 260. The electronic device 208 includes a power pick-up unit 232, a communication and control unit 234, a secondary coil 236 and a battery 238.

In one embodiment, when the logic controller 222 detects that the electronic device 208 is wirelessly coupled, the power switch 221 is switched on to transfer power from the power source 201 to the wireless charger transmitter 223. Thus, the power conversion unit 240 in the wireless charger transmitter 223 receives the DC voltage V_{DC1} via the power switch 221 and converts the received DC voltage into an AC voltage V_{AC1} for the primary coil 250. When the electronic device 208 is wirelessly coupled to the wireless charger transmitter 223, there is induced current and induced voltage V_{AC2} on the secondary coil 236 due to the electromagnetic induction. The power pick-up unit 232 receives the induced voltage V_{AC2} from the secondary coil 236 and converts the induced voltage V_{AC2} into a DC voltage V_{DC2} to charge the battery 238. Therefore, the wireless charger transmitter 223 wirelessly charges the electronic device 208.

As shown in the example of FIG. 3, the communication and control unit 234 in the electronic device 208 sends multiple communication packets via the secondary coil 236 to the wireless charger transmitter 223 to control and regulate power transmitted to the electronic device 208. For example, the communication packets can include a first communication packet including a first parameter representing the device identifier and a second communication packet including a second parameter representing the power that the electronic device 208 requires. The communication and control unit 260 in the wireless charger transmitter 223 receives the first and second communication packets via the primary coil 250, processes the received communication packets, and adjusts the power transmitted to the electronic device 208 in accordance with the second communication packet.

More specifically, as shown in the example of FIG. 3, the communication and control unit 260 in the wireless charger transmitter 223 includes a parasitic metal object detection (PMOD) module 261, a temperature sensor 262, a Pulse-Width-Modulation (PWM) module 263, a protocol module 264 and a demodulator 265. In one embodiment, the demodulator 265 receives the communication packets (e.g., the first and second communication packets) transmitted from the electronic device 208 via the primary coil 250, and demodulates the received first and second communicated packets into first and second demodulated communication packets, respectively. The first and second demodulated communication packets are transmitted to the protocol module 264 for a further processing. Upon receiving the demodulated communication packets, the protocol module 264 implements a protocol analysis, and retrieves the first parameter in the first demodulated communication packet and the second parameter in the second demodulated communication packet in accordance with a wireless communication protocol to which the wireless power transmission conforms, such as QI communication protocol.

In one embodiment, the first parameter is indicative of the identifier of the electronic device 208, and the second parameter is indicative of the power that the electronic device 208 requires. As shown in the example of FIG. 3, the first parameter is sent back to the demodulator 265. Thus, the demodulator 265 can demodulate another communication packet (e.g., a next communication packet) by using of the first parameter. The PWM module 263 receives the second parameter and adjusts the operating frequency of the primary coil 250 in accordance with the second parameter. More specifically, the PWM module 263 calculates the appropriate operating frequency fₒₚ of the primary coil 250 in accordance with the second parameter. The operating frequency fₒₚ is corresponding to the power of the electronic device 208. Then the PWM module 263 transfers the calculated operating frequency fₒₚ into the logic controller 222, and the logic controller 222 controls and adjusts the operating frequency fₒₚ of the primary coil 250 in order to regulate the transmitted power.

As shown in the example of FIG. 3, the PMOD module 261 is coupled to the logic controller 222 and the PWM module 263, and controls the logic controller 222 and the PWM module 263. In one embodiment, the PMOD module 261 detects if a foreign object (such as a key, a coin, etc.) instead of the electronic device 208 is coupled to the charging device 205. If the foreign object is coupled, the temperature of the of the charging device 205 increases, which is adverse to the charging device 205. Thus, if the foreign object is detected to be coupled, the PMOD module 261 shuts down the logic controller 222 and the PWM module 263 simultaneously; therefore, the operation of the primary coil 250 is terminated.

In one embodiment, the temperature sensor 262 is coupled to the PMOD 261, detects temperature of the charging device 205, and sends a temperature signal to the PMOD module 261. The PMOD module 261 compares the received temperature signal with a predetermined temperature value. If the received temperature signal is greater than the predetermined temperature value, then the POMD module 261 determines that the foreign object is coupled, and shuts down the logic controller 222 and the PWM module 263 to terminate operation of the primary coil 250 to protect the charging device 205.

As shown in the example of FIG. 3, the PMOD module 261 is coupled to the protocol module 264, and can further detect the foreign object by communicating with the protocol module 264. In one embodiment, if the foreign object is coupled, the foreign object does not communicate with the wireless charger transmitter 223, and the protocol module 264 will not receive any communication signal from the foreign object. Therefore, if the PMOD module 261 does not receive any communication signal from the protocol module 264 within a predetermined time period, the PMOD module 261 can determine that the foreign object is coupled, and shuts down the logic controller 222 and the PWM module 263 to terminate operation of the primary coil 250 to protect the charging device 205.

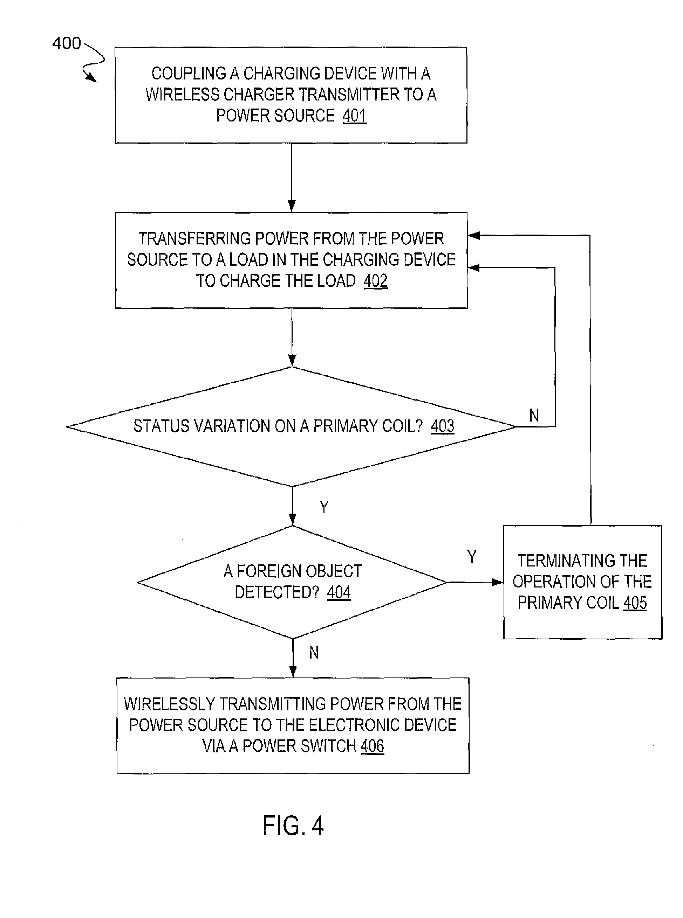

FIG. 4 is a flowchart of an example of operations 400 performed by a charging system 200, in accordance with one embodiment of the present disclosure. FIG. 4 is described in combination with FIG. 3. Although specific steps are disclosed in FIG. 4, such steps are exemplary. That is, the present disclosure is well suited to performing various other steps or variations of the steps recited in FIG. 4.

In the example of FIG. 4, in block 401, a charging device 205 with a wireless charger transmitter 223 is coupled to a power source, for example an AC power source 201, via an AC adapter 203. In block 402, power from the AC power source 201 is transferred to a load 211 (e.g., a battery) in the charging device 205 to charge the load 211. In one embodiment, the power source 201 transfers the power via a charging controller 210 to the load 211. And the charging controller 210 can control the power transferred to the load 211 in accordance with the status (e.g., voltage, current, and temperature, etc.) of the load 211.

In block 403, a logic controller 222 in the charging device 205 can monitor a status of a primary coil 250 in the wireless charger transmitter 223 to detect if an electronic device 208 is wirelessly coupled. More specifically, the as shown in the example of block 403 in FIG. 4, the logic controller 222 detects a voltage variation on the primary coil 250 to detect if the electronic device 208 is coupled. If the voltage variation is not detected, the logic controller 222 can determine that the electronic device 208 is not coupled, then the flowchart 400 goes to the block 402; otherwise, the flowchart goes to the block 404.

In block 404, the charging device 205 detects if a foreign object is coupled. More specifically, a parasitic metal object detection (PMOD) module 261 in connection with a temperature sensor 262 and a protocol module 264 in a communication and control unit 260 of the charging device 205 detects if the foreign object is coupled.

In one embodiment, the temperature sensor 262 detects temperature of the charging device 205, and sends a temperature signal to the PMOD module 261. The PMOD module 261 compares the received temperature signal with a predetermined temperature value. If the received temperature signal is greater than the predetermined temperature value, then the POMD module 261 determines that the foreign object is coupled. In an alternative embodiment, if the PMOD module 261 does not receive any communication signal from the protocol module 264 within a predetermined time period, the PMOD module 261 can determine that the foreign object is coupled. If the foreign object is detected to be coupled, the flowchart 400 goes to the block 405, in which the PMOD 261 terminates the operation of the primary coil 250 to protect the charging device 205. If the foreign object is not coupied, then the flowchart 400 goes to the block 406.

In block 406, the integrated wireless charger transmitter 223 wirelessly transmits power from the AC power source 201 to the electronic device 208 via a power switch 221 to charge the electronic device 208. In one embodiment, when the electronic device 208 is coupled, the logic controller 222 switches on the power switch 221. Thus, power from the AC power source 201 is transferred to the wireless charger transmitter 223 via the power switch 221. As the electronic device 208 is wirelessly coupled to the charging device 205, there are induced current and induced voltage on a secondary coil 236 of the electronic device 208 due to the electromagnetic induction. The induced voltage is received by the electronic device 208 to charge a battery 238 in the electronic device 208. Therefore, the integrated wireless charger transmitter 223 wirelessly charges the electronic device 208.

In one embodiment, the wireless charger transmitter 223 can adjust power transmitted to the electronic device 208 in accordance with the communication with the electronic device 208. More specifically, the electronic device 208 sends a first communication packet and a second communication packet via the secondary coil 236 to the wireless charger transmitter 223. In one embodiment, the first communication packet can include a first parameter representing the device identifier and the second communication packet includes a second parameter indicating the power that the electronic device 208 requires.

A demodulator 265 in the wireless charger transmitter 223 receives the first and second communication packets, and demodulates the received first and second communicated packets into first and second demodulated communication packets, respectively. The protocol module 264 in the wireless charger transmitter 223 implements a protocol analysis and retrieves a first parameter in the demodulated first communication packet and a second parameter in the demodulated second communication packet in accordance with a wireless communication protocol to which the wireless power transmission conforms, such as QI communication protocol.

In one embodiment, the first parameter is indicative of the identifier of the electronic device 208, and the second parameter is indicative of the power that the electronic device 208 requires. The first parameter is sent back to the demodulator 265 for demodulating another communication packet (e.g., the next communication packet). The second parameter is received by a PWM module 263 in the wireless charger transmitter 223. In one embodiment, the PWN module 263 adjusts the operating frequency fₒₚ of the primary coil 250 in accordance with the second parameter. For example, the PWM module 263 calculates the appropriate operating frequency fₒₚ of the primary coil 250 in accordance with the second parameter, and transfers the calculated operating frequency fₒₚ into the logic controller 222. In one embodiment, the logic controller 222 controls and adjusts the operating frequency fₒₚ of the primary coil 250 to regulate the transmitted power.

While the foregoing description and drawings represent embodiments of the present disclosure, it will be understood that various additions, modifications and substitutions may be made therein without departing from the spirit and scope of the principles of the present disclosure as defined in the accompanying claims. One skilled in the art will appreciate that the disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the disclosure being indicated by the appended claims and their legal equivalents, and not limited to the foregoing description.

## Claims

1. An apparatus for wirelessly charging an electronic device, comprising:
a charging controller, coupled to a power source, and configured to transmit power from said power source to a load in said apparatus;
a power switch coupled to said power source;
a logic controller, coupled to said power switch, and configured to detect if said electronic device is wirelessly coupled to said apparatus and to switch on said power switch when said electronic device is detected to be wirelessly coupled; and
a wireless charger transmitter coupled to said power source via said power switch and coupled to said logic controller, wherein said wireless charger transmitter is integrated in said apparatus and configured to wirelessly transmit power from said power source to said electronic device when said power switch is on.

2. The apparatus of claim 1, wherein said electronic device is magnetically coupled to said apparatus.

3. The apparatus of claim 1 or 2, wherein said wireless charger transmitter comprises a primary coil, and wherein said logic controller is configured to monitor a status of said primary coil to detect if said electronic device is wirelessly coupled.

4. The apparatus of claim 3, wherein said electronic device comprises a secondary coil configured to receive power from said primary coil.

5. The apparatus of claim 3 or 4, wherein said integrated wireless charger transmitter comprises:
a demodulator configured to receive a first communication packet and a second communication packet transmitted from said electronic device and to demodulate said first and second communication packets into a first demodulated communication packet and a second demodulated communication packet, respectively; and
a protocol module, coupled to said demodulator, and configured to receive said first and second demodulated communication packets from said demodulator and to retrieve a first parameter from said first demodulated communication packet and a second parameter from said second demodulated communication packet in accordance with a protocol to which wireless power transmission conforms.

6. The apparatus of claim 5, wherein said protocol module is configured to transmit said first parameter to said demodulator for demodulating another packet from said electronic device.

7. The apparatus of claim 5 or 6, wherein said wireless charger transmitter further comprises:
a pulse-width-modulator (PWM) module, coupled to said protocol module, and configured to receive said second parameter from said protocol module and to adjust an operating frequency of said primary coil in accordance with said second parameter.

8. The apparatus of claim 7, wherein said wireless charger transmitter further comprises:
a parasitic metal object detection (PMOD) module, coupled to said PWM module and said logic controller, and configured to shut down said PWM module and said logic controller if a foreign object is detected.

9. The apparatus of claim 8, wherein said wireless charger transmitter further comprises:
a temperature sensor, coupled to said PMOD module, and configured to detect temperature of said apparatus and to send a temperature signal to said PMOD module.

10. The apparatus of claim 9, wherein said PMOD module is configured to determine that said foreign object is coupled to said apparatus if said temperature signal exceeds a predetermined value.

11. The apparatus of claim 8, 9 or 10, wherein said PMOD module is coupled to said protocol module and is configured to determine that said foreign object is coupled if no signal is received from said protocol module within a predetermined time period.

12. A method for wirelessly charging an electronic device, comprising:
transmitting, by a charging controller in an apparatus, power from a power source to a load in said apparatus, wherein the apparatus further comprises a power switch, a logic controller, and a wireless charger transmitter, wherein said charging controller and said power switch are coupled to said power source, wherein said logic controller is coupled to said power switch, wherein said wireless charger transmitter is coupled to said power source via said power switch and coupled to said logic controller, and wherein said wireless charger transmitter is integrated in said apparatus;
detecting, by said logic controller, if said electronic device is wirelessly coupled to said apparatus;
switching on, by said logic controller, said power switch when said electronic device is detected to be wirelessly coupled; and
wirelessly transmitting, by said wireless charger transmitter, power from said power source to said electronic device when said power switch is on.

13. The method of claim 12, further comprising:
monitoring a status of a primary coil in said wireless charger transmitter to detect if said electronic device is wirelessly coupled to said apparatus.

14. The method of claim 13, further comprising:
receiving, by a demodulator in said wireless charger transmitter, a first communication packet and a second communication packet transmitted from said electronic device;
demodulating, by said demodulator, said first and second communication packets into a first demodulated communication packet and a second demodulated communication packet, respectively;
receiving, by a protocol module in said wireless charger transmitter, said first and second demodulated communication packets from said demodulator, wherein said protocol module is coupled to said demodulator; and
retrieving, by said protocol module, a first parameter from said first demodulated communication packet and a second parameter from said second demodulated communication packet in accordance with a protocol to which wireless power transmission conforms.

15. The method of claim 14, further comprising:
demodulating another packet from said electronic device in accordance with said first parameter.

16. The method of claim 14 or 15, further comprising:
adjusting an operating frequency of said primary coil in accordance with said second parameter.

17. The method of claim 14, 15 or 16, further comprising:
terminating operation of said primary coil when a foreign object is detected.

18. The method of claim 17, further comprising:
monitoring temperature of said apparatus; and
detecting if said foreign object is coupled to said apparatus, wherein said foreign object is detected to be coupled if said temperature exceeds a predetermined value.

19. The method of claim 17 or 18, further comprising:
determining said foreign object is coupled to said apparatus if no signal is received, by a parasitic metal object detection (PMOD) module in said wireless charger transmitter, from said protocol module within a predetermined time period.

20. A system for wirelessly charging an electronic device, comprising:
an apparatus according to one of claims 1 to 11; and said power source.
